# EUROPEAN PATENT APPLICATION

(11) **EP 0 881 855 A2**
(43) Date of publication of application: **02.12.1998**
(21) Application number: 98401306.0
(22) Date of filing: 29.05.1998
(51) Int. Cl.: H04Q 11/04

(54) **ISDN callback device for testing telephone line.**

(30) Priority: 30.05.1997 US 866396
(71) Applicant: HARRIS CORPORATION, Melbourne Florida 32919 (US)
(72) Inventor: Soto, Roy L., Moorpark, California 93021 (US); Lester, James W., Ventura, California 93003 (US); Coleman, James D., Malibu, California 90265 (US); Lowell, Alan B., Greensboro, North Carolina 27455 (US)
(74) Representative: Ballot, Paul Denis Jacques

(57) **Abstract**

An ISDN callback device installable in a telephone network facility, and configured to pre-qualify and test ISDN telephone circuits, that either relatively upstream of the ISDN callback device (toward a central office line card), or relatively downstream of the ISDN callback device (toward a network termination, such as a craftsperson's test set or customer premises equipment). The ISDN callback device contains two, individually controllable communication/test interfaces, one of which is operative to emulate a subscriber premises ISDN terminal device, in a network termination (NT1-TE) mode of operation, and the other of which is controllably operative as either a network termination (NT1-TE) mode circuit, or a line termination (LT) mode circuit.

## Description

The present invention is directed to communication systems and is concerned with an ISDN callback device that is installable in a telephone network facility, and may be readily communicate with the portable test set described in the above-referenced, co-pending Soto et al application. The ISDN callback device of the invention is configured to pre-qualify and test ISDN telephone circuits, that may be either relatively upstream of the ISDN callback device (toward a central office line card), or relatively downstream of the ISDN callback device (toward a network termination, such as a craftsperson's test set or customer premises equipment).

Accompanying the current demand for digital signaling loop (DSL) services, particularly those transporting integrated services digital network (ISDN) signals, is the need for equipment through which the telephone lines carrying such signals can be prequalified prior to being placed in service and, once in service, can be readily tested to isolate the source of a problem, whether it be in the central office or at the customer premises.

Advantageously, the above-referenced Soto et al application describes a portable craftsperson's test set that can be readily interfaced with any location along a communication circuit, and is operative to test the circuit, irrespective of the hardware configuration of the circuit, (e.g., two-wire vs. four-wire), or the type of signals that may be conveyed over the circuit (analog or digital). The test set of the Soto et al application has particular utility in testing the transport capability and performance of digital communication circuits, employed for the transport of various types of DSL signals, including ISDN signals.

For this purpose, in addition to circuitry for testing the operation of an analog POTS type of communication circuit, the portable test set described in the Soto et al application contains digital communications controller and associated digital signalling interface circuits, including both 'U' interface and 'S/T' interface circuits, that are controllably operative to transmit and receive digital communication messages over the circuit under test. The contents of these digital communication messages are defined so as to evoke prescribed responses from another 'companion' device, such as like portable test set, that is coupled to another portion (relatively far end) of the communication circuit of interest, whereby a prescribed operational characteristic of the segment of the communication circuit linking the two test sets may be tested. The two devices may operate in respective master and slave modes, enabling a craftsperson using an accessing or 'master' device/test set to derive a measure of the operational performance characteristic of a communication circuit that is coupled in-between the pair of devices.

The new and improved portable test set detailed in the Soto et al application includes a POTS line interface module, containing dial tone detector and DTMF signalling circuitry, and employed for voice communications, DTMF and dial pulse signalling on an analog POTS line. It also includes a standard (two wire) 'U' interface chip used for ISDN (2B1Q) signalling. The test set's 'U' interface chip functions either as a line termination (LT) - emulating a central office interface, or a network termination (NT) - emulating a subscriber premises device. The communications architecture of the portable test set also includes a CODEC coupled via a DTMF link to a POTS line interface module. The CODEC is coupled to a speaker, and to an earpiece receiver transducer. A microphone is coupled to the CODEC and to an audio input port of POTS line interface module. An auxiliary digital RS-232 I/O port may be used to monitor externally provided bearer (B) channel information or to download communication control software into the microcontroller.

According to the present invention an ISDN callback device for controllably testing an ISDN circuit, comprising a first communication interface having a first port to which an ISDN circuit under test is connectable, and which is controllably operative as an ISDN network termination device to conduct ISDN test communications with a test device accessing said ISDN callback device by way of said first port, and a second, dual mode communication interface having a second communication port to which an ISDN circuit under test is connectable, and which is operable as either an ISDN network termination device to conduct ISDN test communications over an ISDN circuit coupled to said second port, or as a line termination (LT) device terminating an ISDN circuit coupled to said second port.

The present invention includes a method of testing an ISDN circuit, comprising the steps of:
(a) coupling said ISDN circuit to a first communication interface which is controllably operative as an ISDN network termination device to conduct ISDN test communications with a test device;
(b) accessing said ISDN network termination device and causing said first communication interface to exchange contents of respective bearer channels of said ISDN circuit, so that said respective two bearer channels are looped back through a common bearer channel transport path; and
(c) performing full-duplex connectivity BER testing of said ISDN circuit by way of said common bearer channel transport path of said two looped back bearer channels.

Conveniently, the present invention provides a practical communications architecture that is coupled to the test tip/ring bus of a central office switch, and is operative to fulfill the above-described need for readily accessible equipment, through which telephone lines carrying ISDN signals can be prequalified prior to being placed in service and, once in service, can be readily tested to isolate the source of a problem. As will be described, the ISDN callback device of the present invention contains a pair of communication/test interfaces, a first (NT1-TE) interface is dedicated to network termination mode operations, for emulating a subscriber premises ISDN terminal device, in a network termination (NT1-TE) mode of operation. The second interface is selectively operable as either a network termination (NT1-TE) mode circuit, or a line termination (LT) mode circuit, and employs the test tip/ring bus in the switch.

The NT1-TE mode dedicated interface is a first 'U' interface chip coupled to a bearer channel exchange unit, that is operative to exchange or 'swap' the contents of the bearer (B1 and B2) channels of an ISDN circuit under test, so that the two bearer channels may be looped back through a common bearer channel transport path, and allow bit error rate testing of the full ISDN information channel bandwidth. The NT1-TE 'U' interface is further coupled with a CODEC, voice/DTMF circuitry and to a supervisory microcontroller. The ISDN callback device's microcontroller contains a set of serial communications controllers, respectively associated with first and second ISDN bearer (B1, B2) channel signals, and D channel signals, that are interfaced by the NT1-TE mode 'U' interface chip and a second, a dual mode (LT or NT1-TE mode) 'U' interface chip. The microcontroller is coupled to a data bus for transporting parameter data provided by a standard line parameter measurement interface card coupled with the test tip/ring bus of a central office switch.

The 'U' interface chip of the dual mode interface is coupled to a second communication port that terminates a two-wire pair for testing an 'upstream' communication circuit, such as a central office line card, or testing a'downstream' communication circuit, such as one connected to a customer premises equipment (CPE). A (0 dBm) attenuator is controllably insertable in the two-wire link for tone generation. A (48V) line termination battery supply is operative to provide a loop supply voltage to the two-wire. In addition, a current sense resistor is provided for line current measurements. The current measured through the sense resistor is digitized and read. by the control processor. It is also stored in memory and available to the parameter measurement card.

The (NT1-TE mode-associated) CODEC has an analog output port coupled to a DTMF receiver, the output of which is coupled to the communications controller 100. The CODEC also has an analog input port coupled to a tip/ring unit containing line-coupling hybrid circuitry, and is configured to provide talk battery for powering a remote POTS-based test set that is coupled with the ISDN callback device via metallic tip and ring leads of a POTS network line. The ring/tip interface is coupled to a DTMF receiver and speech synthesizer. The DTMF receiver decodes DTMF signals from a remote device coupled to the ring/tip interface into digital format for application to the control processor. Such a DTMF signalling path allows a remote test set coupled to telephone interface to provide control commands into the callback device for programming purposes. The speech synthesizer is used to generate synthesized voice message signals to a network access user, such as a field technician accessing the ISDN callback device by way of an ISDN test set coupled to the dedicated NT1-TE port. An auxiliary digital (RS 232) I/O port may be used to provide digital control and programming of the callback device via a digital terminal device, such as portable personal computer.

A second (LT mode/NT1-TE mode-associated) CODEC has an analog port coupled via an audio link to the line parameter measurement interface card. Data communications between the line parameter measurement interface card and the microcontroller are conducted via a data/address bus to which the bearer channel exchange unit 13 also coupled. the second CODEC has a digital port coupled to the dual mode 'U' interface chip and to serial communication controllers of the microcontroller.

The default mode of the ISDN callback device of the present invention is NT1-TE mode, in which the dedicated NT1-TE 'U' interface chip is employed as a network termination (NT) for emulating a subscriber premises ISDN terminal device, - looking 'upstream' toward the central office and receiving calls placed via the central office to the directory number of the ISDN callback device. In response to the placement of a call from an accessing device to the ISDN callback device via one of the bearer channels, the microcontroller generates a response menu of options, the selective exercising of which by the accessing user will dictate what action is to be taken.

When the ISDN callback device is initially accessed via the NT1-TE port, the contents of the incoming call are searched for a prescribed precursor code to determine whether the accessing device is of the type described in the above-referenced Soto et al application. If so, the precursor code will identify it as such, so as to allow direct digital data communications transport protocol to be carried out between the accessing test device and the microcontroller, without the need for a CODEC. If this identifier is not recognized, communications are effected through the CODEC. Menu choices and instructions from the microcontroller are generated using speech synthesizer, digitized by the CODEC and coupled therefrom to the NT1-TE 'U' interface chip and output via the NT1-TE port. In the receive direction from the accessing technician's test set, digital signals are converted into DTMF tones by the CODEC and decoded by DTMF receiver for application to the microcontroller.

The dedicated NT1-TE interface may be used to perform either half-duplex or full-duplex connectivity (BER) testing of an ISDN circuit of interest. To establish half-duplex connectivity, a craftsperson may place a call from his test set, using the directory number associated with one of the two bearer channels (e.g, B1) of the ISDN circuit. When the incoming call on the B1 channel is answered via the NT1-TE 'U' chip interface, a caller ID routine within microcontroller will detect the calling number (namely, which of the two bearer channels is being used to place the call to the ISDN. callback device. Next, the microcontroller generates a synthesized voice-visual display reply message to the calling test set indicating the detected number (caller ID), followed by a menu of options available to the calling party.

In order to exercise the second bearer channel, the menu includes the option to instruct the ISDN callback device to call back the detected number on the second directory number. If this option is selected by the calling craftsperson, the caller is instructed to enter the second directory number associated with the second bearer channel via a keypad entry of a craftsperson's test set. This second directory number is transmitted to the ISDN callback device on the already established first bearer channel. Using the second bearer channel's ID, the microcontroller then places a return channel call via the central office over return channel to the calling test set, thereby allowing the technician to selectively talk on either channel. Once a looped communication path is provided through the central office to the ISDN callback device, half-duplex bit error rate testing (BERT) may be readily conducted from the accessing test device.

For conducting full-duplex communications on each of the bearer channels of the (2B+D ISDN circuit) between an accessing test set and the ISDN callback device, the accessing test device must be capable of providing a loopback on one of the bearer channels back to the ISDN callback device. Since the ISDN test device described in the above-referenced Soto et al application provides this capability, it may be readily employed to conduct such full-duplex, dual bearer channel communications.

To execute full-duplex, dual bearer channel BERT testing, the call establishment and return scenario described above is augmented by looping the contents of the return call channel back to the ISDN callback device, and requesting a 'swap' or exchange of the contents of the looped back channel into the channel in the return direction from the ISDN callback device back to the accessing test set.

This operation is executed by the dual link controller so that the contents of the two bearer channels are exchanged by means of cross-coupled, write-read operations of a pair of buffer registers. This bearer channel exchange operation provides what is effectively a full-duplex usage of both bearer channels between the test 201 and the ISDN callback device, so as to enable bit error rate testing of the full information channel bandwidth of the line through the same signal path.

In accordance with a second operational aspect of the architecture of the ISDN callback device of the present invention, the ISDN callback device is selectively operative to emulate either line termination (LT), as an 'upstream' line termination device, i.e., a central office interface (line card) looking downstream towards a network termination, or a 'downstream' network termination (NT1-TE) device - a subscriber premises ISDN terminal device, looking 'upstream' toward a central office line card.

For each of these operational modes, communications between the ISDN callback device and the circuit under test, which is coupled to the dual usage port, are conducted by means of the dual mode 'U' interface chip. For a first, NT1-TE self call mode of operation, in response to a command to execute a 'self call' routine, the ISDN callback device is employed as a network termination (NT), looking 'upstream' toward the central office and placing a call via the central office back to itself. The effect of this self-call connection is similar to the full-duplex, dual bearer channel connectivity between the ISDN callback device and the central office, described previously, so as to allow bit error rate testing of the full information channel bandwidth of the line through the same signal path.

When the self call communications control routine is initiated, the ISDN callback places a call to itself on one of the two bearer channels, using the other bearer channel to transport the call request. Using the test tip/ring bus of the central office switch, to which the ISDN callback device is coupled, the associated line card will place a call to the dialed directory number associated with the called bearer channel, namely, a looped back bearer channel path to the ISDN callback device. When the incoming call on the called bearer channel is answered, the caller ID routine within microcontroller will detect the calling number (namely, which of the two bearer channels is being used to place the call to the ISDN callback device, thereby identifying the return channel path back to the ISDN callback device.

The microcontroller then places a return channel call over the called/return bearer channel to the central office, which provides the return path to the calling number, namely the directory number associated with the calling channel. With the ISDN callback device now provided with dual sets of communication paths that are looped directly with the central office and conveying each of the two bearer channels, full-duplex bit error rate testing (BERT) may be readily conducted on the 'upstream' portion of the ISDN circuit.

In LT mode of operation, the ISDN callback device is employed as an 'upstream' line termination device, i.e., a central office interface (line card) looking downstream towards a network termination. A typical command/control sequence is sourced from parameter measurement interface card to conduct standard tests of the downstream circuit. In the LT mode, individual calls are placed over each of respective B1 and B2 channels from the ISDN callback device to an ISDN test device, such as that described in the above-referenced Soto et al application, which loops the bearer channels back over return loops to the 'U' interface chip. In addition, the test set loops back the control (D) channel back. In this mode of operation, prescribed testing (e.g., BERT, tone generation, current measurement, impedance testing) of each of the individual channels of the 'downstream' ISDN circuit under test may be individually conducted.

The invention will now be described, by way of example with reference to the accompanying drawings in which:
Figure 1 diagrammatically illustrates the overall architecture of the ISDN callback device.
Figure 2 is a connectivity diagram of a single bearer channel loop established by the routine shown in the associated flow chart of Figure 3, for conducting half-duplex testing of an ISDN circuit using the ISDN callback architecture of Figure 1;
Figure 4 is a connectivity diagram of dual bearer channel loops established by the routine shown in the associated flow chart of Figure 5, for conducting full-duplex testing of an ISDN circuit using the ISDN callback architecture of Figure 1;
Figure 6 diagrammatically illustrates an operational aspect of the architecture of the ISDN callback device of Figure 1, in which the ISDN callback device is selectively operative to emulate one of a line termination (LT) and a network termination (NT1-TE) device;
Figure 7 is a connectivity diagram of dual bearer channel loops established by the NT1-TE emulation routine shown in the associated flow chart of Figure 8, for conducting full-duplex testing of an upstream portion of the ISDN circuit diagram of Figure 6; and
Figure 9 is an LT mode connectivity diagram for establishing respective B and D channel loops for BER testing of respective downstream portions of the ISDN circuit diagram of Figure 6.

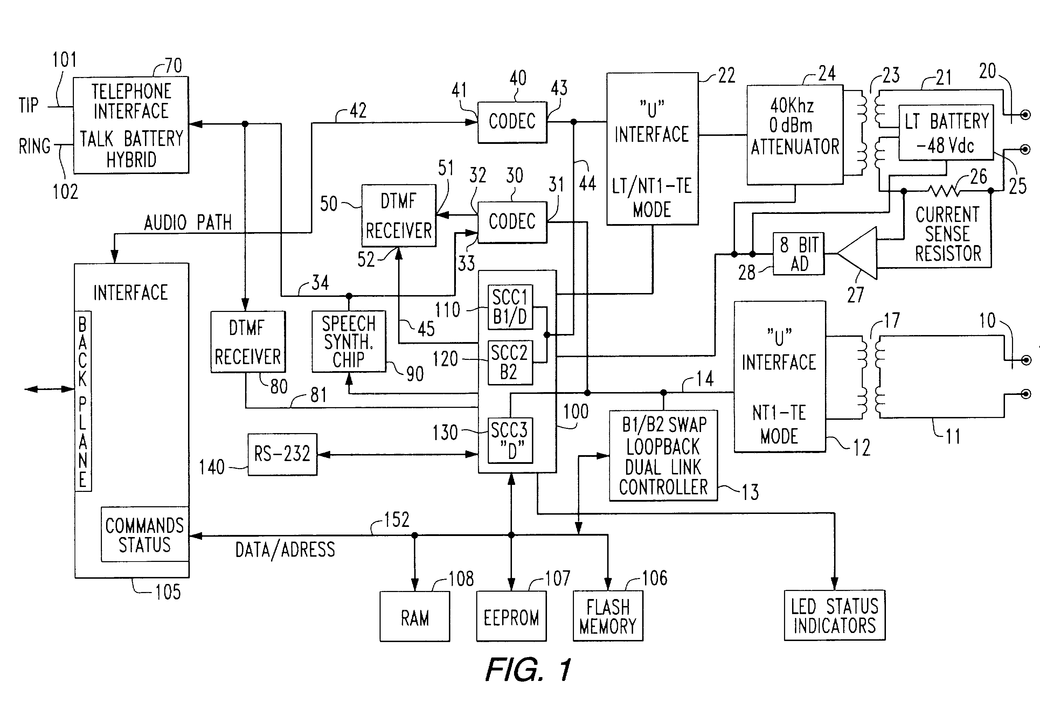

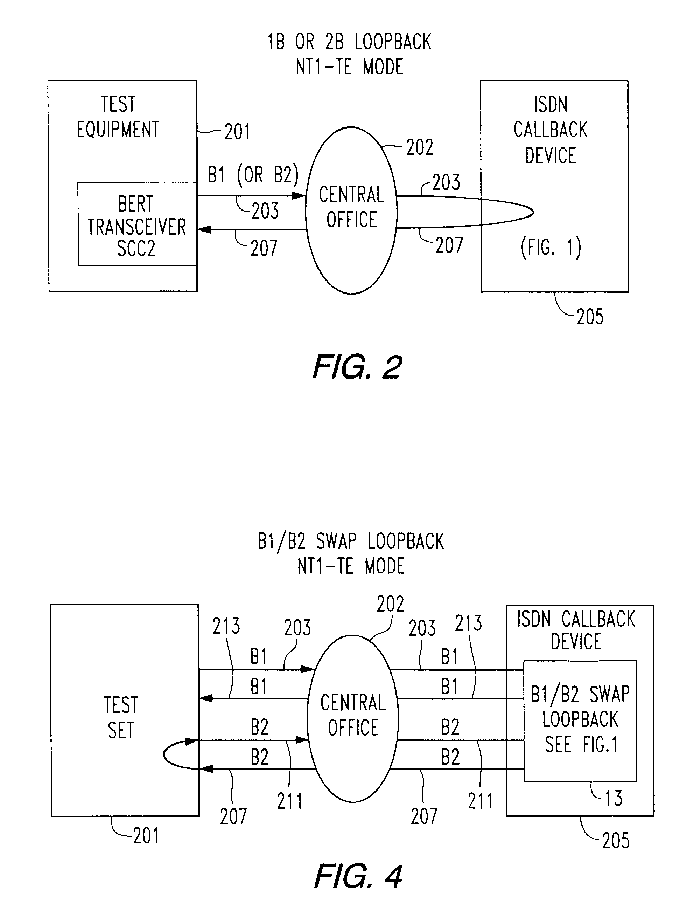

The overall architecture of the ISDN callback device is diagrammatically illustrated in Figure 1 as comprising a first communication port 10, to which a two-wire pair from an 'upstream' communication circuit such as craftsperson's test set, as a non-limiting example, is connectable. Via a two-wire pair 11, port 10 is transformer-coupled through a transformer 17 to a first (NT1-TE) mode 'U' interface chip 12. As will be described, 'U' interface chip 12 is employed as a network termination (NT) for emulating a subscriber premises ISDN terminal device, in a terminal equipment network termination (NT1-TE) mode of operation.

In this (NT1-TE) mode of operation, the ISDN callback device architecture of Figure 1 may be accessed by a test device for conducting loopback bit error rate testing (BERT) of one or both bearer channels. As a non-limiting example, such an accessing test device may comprise a test of the type described in the above-referenced co-pending Soto et al patent application. The NT1-TE mode 'U' interface chip 12 is coupled via a digital communications bus 14 to a bearer channel exchange unit 13 (such as a Motorola MC145488 dual link controller chip, as a nonlimiting example). As will be described, bearer channel exchange unit 13 is operative under processor control to exchange or 'swap' the contents of the bearer (B1 and B2) channels of an ISDN line under test (LUT), so that the two channels may be looped back through a common bearer channel transport path, and thereby allow bit error rate testing of the full information channel bandwidth of the line through the same signal path.

Digital communications bus 14 is further coupled with a (NT1-TE mode-associated) CODEC 30 and associated DTMF/speech circuitry 50/90, and to a D channel-associated serial communications controller (SCC) 130 of a supervisory control processor or communications microcontroller 100. Microcontroller 100 is operative to control the operation of the ISDN callback device in accordance with a supervisory control program resident in an EEPROM 107. For this purpose, communications controller 100, which may comprise a Motorola 68302 serial communications controller chip, as a non-limiting example, contains a set of serial communications controllers (SCCs) 110, 120 and 130, respectively associated with first and second ISDN bearer (B1, B2) channel signals, and control or D channel signals. The SCCs are interfaced by the first, NT1-TE mode 'U' interface chip 12 and a second, a dual mode (line termination or LT mode and NT1-TE mode) 'U' interface chip 22. Communications controller 100 also employs associated memory units, including a limited storage capacity flash memory 106, the EEPROM 107 in which the operational software for the microcontroller is stored, and a random access memory (RAM) 108 for storing data processed by the microcontroller 100 and parameter data provided by a standard line parameter measurement interface card 105, installable in a central office switch.

Dual mode 'U' interface chip 22 includes a (40 KHz) tone generator and is coupled via a transformer 23 and a two-wire link 21 to a second communication port 20. Port 20 terminates a two-wire pair for testing an 'upstream' communication circuit, such as central office line card, or testing a 'downstream communication circuit, such as one connected to a customer premises equipment (CPE). A selectively controllable 0 dBm. attenuator 24 is controllably insertable in two-wire link 21 under processor control in the course of conducting a 40 KHz tone generation. Also coupled with the transformer 23 is a (48V) line termination battery supply 25, for controllably providing a loop supply voltage to the leads of two-wire link 21, as will be described. For line current measurement purposes, a current sense resistor 26 is coupled in link 21. The terminals of current sense resistor 26 provide a differential voltage input to respective inputs of a differential amplifier 27, the output of which is digitized via an analog-to-digital (A-D) converter 28 and coupled to a controller bus 28, so as to allow the loop current to be measured and read by the control processor 100. The detected value is stored in RAM 108 and available to parameter measurement card 105, as will be described.

As pointed out above, the (NT1-TE mode-associated) CODEC 30, DTMF receiver 50 and speech synthesizer chip 90 are employed in association with NT1-TE mode 'U' interface chip 12 to conduct audio signal format (DTMF) based NT1-TE communications with an accessing test device, that is coupled in a communication path to port 10. As will be described, these communications may include test parameter data communications between the central office switch's parameter measurement card 105 and the accessing test device. For this purpose, CODEC 30 has a digital port 31 coupled to bus 14, and an analog output port 32 coupled to the input 51 of a DTMF receiver 50, the output 52 of which is coupled via a link 45 to communications controller 100. CODEC 30 also has an analog input port 33 coupled via a link 34 to a telephone interface 70. Also coupled to link 34 is speech synthesizer chip 90, which is driven by microcontroller 100.Telephone interface 70 is a standard tip/ring interface unit containing line-coupling hybrid circuitry, and is configured to provide talk battery for powering a remote POTS-based test set that is coupled with the ISDN callback device via metallic tip and ring leads 101 and 102 of a POTS network metallic pair.

Link 34 is also coupled to a DTMF receiver 80 and to a speech synthesizer 90. DTMF receiver 80 is operative to decode DTMF signals from a remote device coupled to telephone interface 70 into digital format for application to processor 100, via link 81. Such a DTMF signalling path allows a remote test set coupled to telephone interface 70 to provide control commands into the callback device for programming purposes. Speech synthesizer 90 is operative, under processor control, to generate synthesized voice message signals to a network access user, such as a field technician accessing the ISDN callback device by way of an ISDN test set coupled to port 10. An auxiliary digital (RS 232) I/ O port is provided by way of a multipin connector, such as an RJ-45 jack, coupled to an RS-232 transceiver 140, and may be used to provide digital control and programming of the callback device via a digital terminal device, such as portable personal computer.

A second (LT mode/NT1-TE mode-associated) CODEC 40 has an analog port 41 coupled via an audio link 42 to line parameter measurement interface card 105. Data communications between the line parameter measurement interface card 105 and microcontroller 100 are conducted via a data/address bus 152 to which the bearer channel exchange unit 13 is also coupled. CODEC 40 has a digital port 43 coupled via link 44 to dual mode 'U' interface chip 22 and to serial communication controllers 110 and 120 of microcontroller 100.

The ISDN callback device of the present invention is configured and programmable to enable the device to selectively respond to and initiate ISDN-based communications for determining individual or full bandwidth performance of an ISDN communication circuit of interest. Command/response message exchanges may be conducted using ISDN bearer channel (B1) and (B2) signalling over the ISDN circuit to which the test set has been connected. Alternatively commands and programming may be supplied via interface 70 or auxiliary digital data signalling (RS-232) interface 120.

Figures 2-5 include the default mode of the ISDN callback device of the present invention is NT1-TE mode, in which the NT1-TE 'U' interface chip 12 is employed as a network termination (NT) for emulating a subscriber premises ISDN terminal device (looking 'upstream' toward the central office and receiving calls placed via the central office to the directory number of the ISDN callback device). In this (response) mode of operation, a call is placed from an accessing device, such as a craftsperson's test unit, via the central office to the ISDN callback device via one of the bearer channels, and the communications controller 100 generates a response menu of options, the selective exercising of which by the accessing user will dictate what action is to be taken by the ISDN callback device architecture of Figure 1.

When the ISDN callback device is initially accessed via the NT1-T:E port 10, the communication control routine executed by microcontroller 100 performs a default search for a prescribed precursor code within the message from the accessing device. In particular, if the accessing device is of the type described in the above-referenced Soto et al application, the precursor code will identify it as such, so as to allow direct digital data communications transport protocol to be carried out between the accessing test device and the microcontroller 100, without the need for CODEC 30. If this identifier is not recognized, communications are effected through the CODEC 30. Menu choices and instructions from microcontroller 100 are generated using speech synthesizer 90, digitized by CODEC 30 and coupled therefrom to 'U' interface chip 12 and output via port 10. In the receive or incoming direction from the accessing technician's test set, digital signals received at port 10 are converted into DTMF signals by CODEC 30 and decoded by DTMF receiver for application to microcontroller 100.

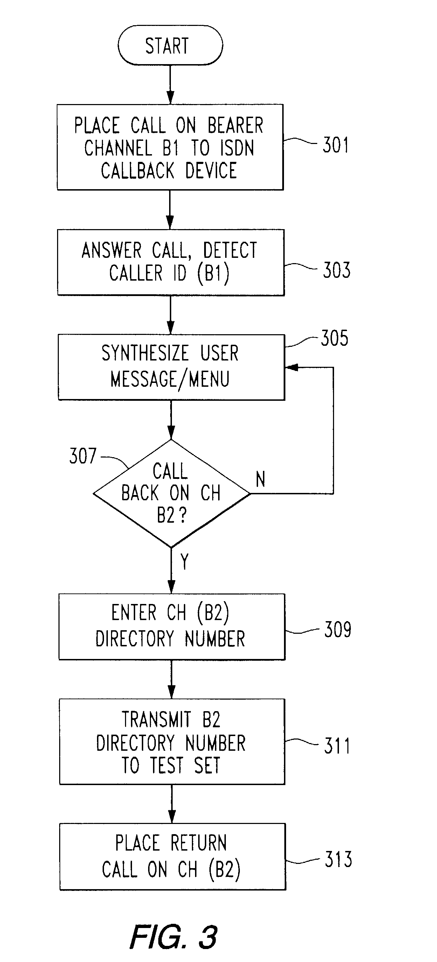

As a non-limiting example of a typical NT1-TE communication sequence that may be conducted between the ISDN callback device of the present invention and an accessing test set, consider the case of initially installing an ISDN line to a customer premises. When an ISDN line is initially installed, it is desirable to test the operability or prequalify the line prior to subscriber use. A half-duplex connectivity diagram illustrated in Figure 2 may be realized using the ISDN callback device of the invention to execute the routine illustrated in the flow chart of Figure 3.

As shown therein, at a first step 301, using one of the two directory numbers respectively associated with the (B1) and (B2) bearer channels of the customer's ISDN terminal equipment, the craftsperson located at the customer premises places a call from his test set 201, via central office 202, using the directory number associated with that bearer (e.g, B1) channel 203 to the ISDN callback device architecture of Figure 1, shown at 205. When the incoming call on B1 channel 203 to port 10 is answered (via the NT1-TE 'U' chip interface 12), in step 303, the caller ID routine within microcontroller 100 will detect the calling number (namely, which of the two bearer channels (here channel B1) is being used to place the call to the ISDN callback device 205. In step 305, the response routine executed by microcontroller 100 generates a synthesized voice reply message indicating the detected number (caller ID), followed by a menu of options available to the calling party.

In order to exercise the second bearer channel (here channel B2) of the ISDN circuit, the menu includes the option to instruct the ISDN callback device 205 to call back the detected number on the second bearer channel. (second directory number), as shown by query step 307. If this option is selected by the calling craftsperson, the answer to query step 307 is YES, and the caller is instructed to enter the second directory number associated with the second bearer channel (via a keypad entry of a craftsperson's test set), as shown at step 309.

In step 311, this second bearer channel identifier (the directory number of channel B2) that has been entered by the craftsperson and transmitted to the ISDN callback device 205 on B1 channel 203 is transmitted to the ISDN callback device 205 (via the already established first bearer channel B1 by way of which the technician accessed the callback device in step 301). Using the second bearer channel's ID, in step 313, the microcontroller 100 places a return channel call via the central. office 202 over return channel 207 to the calling test set 201, thereby allowing the technician to selectively talk on one bearer channel (B1) and listen on the other (B2).

With the accessing test set 201 now provided with a looped communication path through the central office 202 to the ISDN callback device 205, employing one of the two bearer channels (e.g., channel B1) for test set-to-ISDN callback device signalling and the other of the two bearer channels (e.g., channel B2) for ISDN callback device-to-test set signalling, half-duplex bit error rate testing (BERT) may be readily conducted from the accessing test device 201.

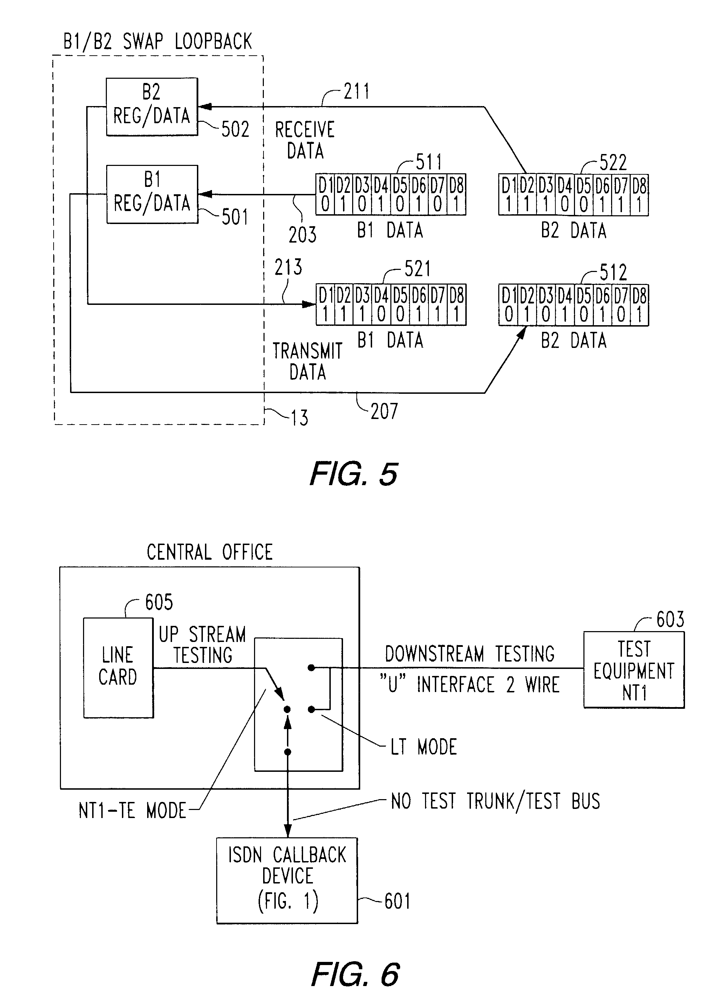

In addition to providing for BERT signalling via two half-duplex bearer channels of the ISDN circuit under test, as diagrammatically shown in Figures 2 and 3, described above, the ISDN callback device of the invention is also capable of providing full-duplex communications on each of the bearer channels of the (ISDN circuit) between an accessing test set 201 and the ISDN callback device 205, as illustrated diagrammatically in Figure 4. In this full-duplex, dual channel loopback mode, the accessing test device 201 must be capable of providing a loopback on one of the bearer channels back to the ISDN callback device 205, as indicated by the loopback of bearer channel B2 over return path 211 in Figure 4. Since the ISDN test device described in the above-referenced Soto et al application provides this capability, it may be readily employed to conduct such full-duplex, dual bearer channel communications.

To execute full-duplex, dual bearer channel BERT testing, the call establishment and return scenario described above with reference to the flow chart of Figure 3 is augmented by looping the contents of the return call channel 207 (e.g., channel B2 used by the ISDN callback device to call back the accessing test set in step 313) back to the ISDN callback device 205, and. requesting a 'swap' or exchange of the contents of the looped back (B2) channel 211 into the (B1) channel in the return direction, over path 213 from the ISDN callback device back 205 to the accessing test set 201.

This operation, as carried out by the dual link controller 13 of Figure 1, is diagrammatically illustrated in Figure 5, wherein the contents of the two bearer channels are exchanged by cross-coupled, write-read operations of a pair of buffer registers 501 and 502 of the dual link controller 13. As shown in Figure 5, a respective B1 channel data packet 511 received on channel 203 from the test set 201 is buffered in register 501, and transmitted out on return path 207 to the test set as a respective B2 channel data packet 512. Conversely, a respective B2 channel data packet 522 received on channel 211 from the test set 201 is buffered in register 502, and transmitted out on return path 213 to the test set 205 as a respective B1 channel data packet 521. This bearer channel exchange operation provides what is effectively a full-duplex usage of both bearer channels between the test set 201 and the ISDN callback device 105, so as to enable bit error rate testing of the full information channel bandwidth of the line through the same signal path.

Figure 6 diagrammatically illustrates a second operational aspect of the architecture of the ISDN callback device of the present invention, in which the ISDN callback device, shown at 601, is selectively operative to emulate one of a line termination (LT), as an'upstream' line termination device, i.e., a central office interface (line card) looking downstream towards a network termination 603 (such as the test set described in the above-referenced Soto et al application), and a second, 'downstream' network termination (NT1-TE) device - a subscriber premises ISDN terminal device (looking 'upstream' toward a central office line card 605).

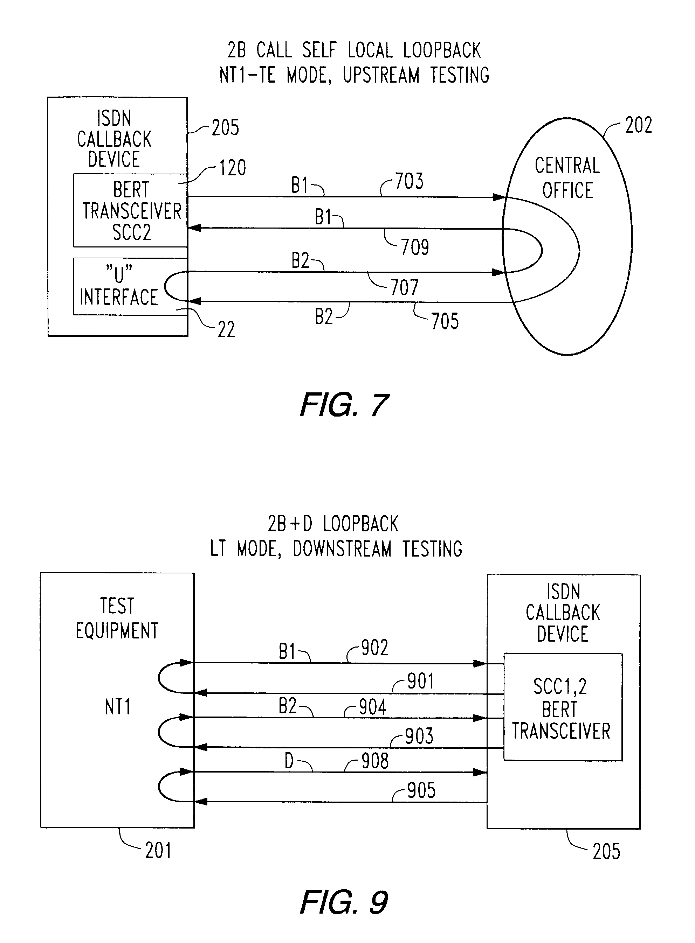

As pointed out above in the description of Figure 1, for each of these operational modes, communications between the ISDN callback device and the circuit under test, which is coupled to the ISDN callback device via port 20, are conducted by means of 'U' interface chip 22, and allow the ISDN callback device to test either that portion of the ISDN circuit that is relatively 'upstream' to the ISDN callback device (i.e., toward the central office, as diagrammatically illustrated in Figure 7), or that portion of the ISDN circuit that is relatively 'downstream' to the ISDN callback device (i.e., toward a network termination, such as a test device, as diagrammatically shown in Figure 9).

In this mode of operation, in response to a command to execute a 'self call' routine, via 'U' chip 22 and port 20, the ISDN callback device is employed as a network termination (NT) for emulating a subscriber premises ISDN terminal device, looking 'upstream' toward the central office and placing a call via the central office back to itself. Such commands may be provided from an auxiliary test set coupled to telephone interface 90, a computer terminal coupled to the RS-232 interface 140, or from parameter measurement interface card 105. As will be described, the effect of this self-call connection is similar to that of Figure 5, described above; here, full-duplex, dual bearer channel connectivity is effectted between the ISDN callback device and the central office, thereby allowing bit error rate testing of the full information channel bandwidth of the line through the same signal path.

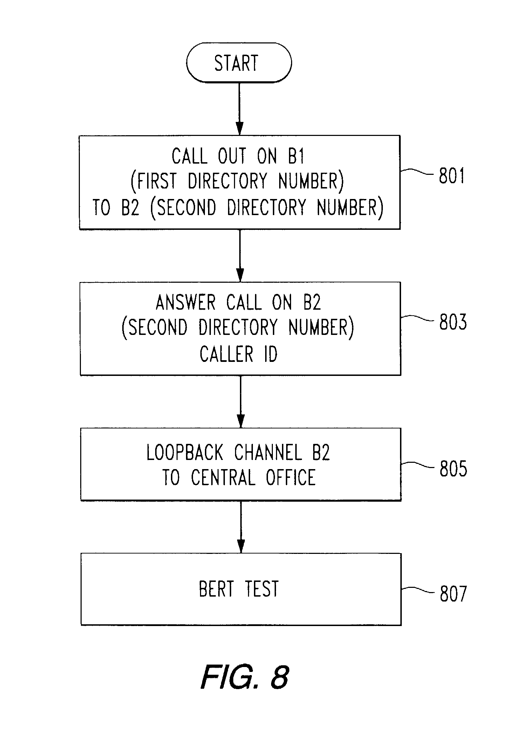

At a first step 801 of the self call communications control routine shown in the flow chart of Figure 8, using one of the two directory numbers respectively associated with the (B1) and (B2) bearer channels of the ISDN circuit under test (e.g., channel B1, as shown by path 703 in Figure 7), the ISDN callback device 205 places a call to itself, calling the directory number associated with the other of the pair of bearer channels (here the B2 channel). Via the test tip/ring bus of the central office switch, to which the ISDN callback device is coupled, the associated line card will receive the call request on the one of the two directory numbers (e.g., associated with the B1 channel) and place a call to the dialed directory number (e.g., associated with the B2 channel), namely, thereby effecting a looped back bearer channel path 705 to the 'U' chip 22 via port 20 of the ISDN callback device.

When the incoming call on the B2 channel to port 20 from the central office line card is answered (via the NT1-TE mode 'U' chip interface 22), in step 803, the caller ID routine within microcontroller 100 will detect the calling number (namely, which of the two bearer channels (here channel B1) is being used to place the call to the ISDN callback device 205 (and thereby identifying the return channel path 709 back to the ISDN callback device).

Next, in step 805, the microcontroller 100 loops the call back over the return B2 channel 707 to the central office 202, which provides the return path to the calling number, namely the directory number associated with the calling B1 channel, as shown by the central office-to-ISDN callback device return path 709. With the ISDN callback device 205 now provided with communication paths 703 - 705 - 707 - 709, that are looped directly with the central office 202 and conveying each of the two bearer channels, full-duplex bit error rate testing (BERT) may be readily conducted on the 'upstream' portion of the ISDN circuit, as shown in step 807.

In this mode of operation, in response to a command to execute a 'downstream loopback' routine, via 'U' chip 22 and port 20, the ISDN callback device is employed as an 'upstream' line termination device, i.e., a central office interface (line card) looking downstream towards a network termination (such as the test set described in the above-referenced Soto et al application). Again, such commands may be provided from an auxiliary test set coupled to telephone interface 70, a computer terminal coupled to the RS-232 interface 140, or from the parameter measurement interface card 105. A typical command/control sequence is sourced from parameter measurement interface card 105, to conduct standard tests of the downstream circuit, via CODEC 40 and 'U' interface 22.

In Figure 9, individual calls are placed over each of respective B1 and B2 channels 901 and 903 from the ISDN callback device 205 to an ISDN test device 201, such as that described in the above-referenced Soto et al application (or NT1), which loops the bearer channels back over return loops 902 and 904 to the 'U' chip 22 of the ISDN callback device 205. In addition, the test set loops back the control (D) channel back over looped paths 905 and 906, as shown. In this mode of operation, prescribed testing (e.g., BERT, tone generation, current measurement, impedance testing) of each ISDN circuit under test.

The ISDN callback device of the present invention is configured to enable prequalification and testing of ISDN telephone circuits, that may be either relatively upstream of the ISDN callback device - toward a central office line card, or relatively downstream of the ISDN callback device - toward a network termination, such as a craftsperson's test set or customer premises equipment.

Advantageously, the ISDN callback device of the present invention is configured to be readily interfaced with and function in cooperation with the portable test set described in the above-referenced, co-pending Soto et al application. What is provided therefore is a practical communications architecture, that is readily coupled with the test tip/ring bus a central office switch, and is operative to fulfill the current need for equipment that enables telephone lines carrying ISDN signals can to be prequalified prior to being placed in service and, once in service, readily tested to isolate the source of a problem. By virtue of the two respective communication/test interfaces, the callback device facilitates network termination mode operations, for emulating a subscriber premises ISDN terminal device, in a terminal equipment network termination (NT1-TE) mode of operation, and the ability to be selectively operable as either a network termination (NT1-TE) mode circuit, or a line termination (LT) mode circuit.

An ISDN callback device installable in a telephone network facility, and configured to pre-qualify and test ISDN telephone circuits, that either relatively upstream of the ISDN callback device (toward a central office line card), or relatively downstream of the ISDN callback device (toward a network termination, such as a craftsperson's test set or customer premises equipment). The ISDN callback device contains two, individually controllable communication/test interfaces, one of which is operative to emulate a subscriber premises ISDN terminal device, in a network termination (NT1-TE) mode of operation, and the other of which is controllably operative as either a network termination (NT1-TE) mode circuit, or a line termination (LT) mode circuit.

## Claims

1. An ISDN callback device for controllably testing an ISDN circuit, comprising a first communication interface having a first port to which an ISDN circuit under test is connectable, and which is controllably operative as an ISDN network termination device to conduct ISDN test communications with a test device accessing said. ISDN callback device by way of said first port, and a second, dual mode communication interface having a second communication port to which an ISDN circuit under test is connectable, and which is operable as either an ISDN network termination device to conduct ISDN test communications over an ISDN circuit coupled to said second port, or as a line termination (LT) device terminating an ISDN circuit coupled to said second port.

2. An ISDN callback device as claimed in claim 1, wherein said first communication interface is operative to exchange contents of respective bearer channels of an ISDN circuit coupled to said first port, so that said respective two bearer channels may be looped back through a common bearer channel transport path terminated by said first port, and allow bit error rate testing of the full ISDN information channel bandwidth of the ISDN circuit coupled to said first port, and preferably said first communication interface is operative to perform half-duplex connectivity (BER) testing of an ISDN circuit coupled to said first communication port, or said first communication interface is operative to perform full-duplex connectivity (BER) testing of an ISDN circuit coupled to said first communication port.

3. An ISDN callback device as claimed in claim 1 or 2, wherein said second, dual mode communication interface is configured to perform electrical parameter measurements on an ISDN circuit coupled to said second port, in which said electrical parameter measurements include tone generation and current measurement, and said second, dual mode communication interface is configured to supply line voltage to a metallic circuit coupled to said second port.

4. An ISDN callback device according to claim 1, wherein said first communication interface is configured to conduct direct digital data communications with a digital communication-based test set terminating an ISDN circuit coupled. to said first port, in which said first communication interface includes codec and voice/DTMF processing circuitry for performing data communications with a test set terminating an ISDN circuit coupled to said first port.

5. An ISDN callback device as claimed in any one of claims 1 to 4, including a third, telephone interface having a third port for terminating a POTS line, said telephone interface being coupled to said first communication interface, and being operative to provide a communication path for a test set providing control commands via said third port for programming said ISDN callback device.

6. An ISDN callback device for controllably testing an ISDN circuit, comprising a first communication interface having a first port to which an ISDN circuit under test is connectable, and which is controllably operative as an ISDN network termination device to conduct ISDN test communications with a test device accessing said ISDN callback device by way of said first port, said first communication interface being operative to exchange contents of respective bearer channels of said ISDN circuit, so that said respective two bearer channels may be looped back through a common bearer channel transport path terminated by said first port, and provide full-duplex connectivity (BER) testing of said ISDN circuit, so as to allow bit error rate testing of the full ISDN information channel bandwidth of said ISDN circuit.

7. An ISDN callback device as claimed in claim 11, including a second, dual mode communication interface having a second port to which an ISDN circuit under test is connectable, and which is operable as either an ISDN network termination device to conduct ISDN test communications over an ISDN circuit coupled to said second port, or as a line termination (LT) device terminating an ISDN circuit coupled to said second port, in which said second, dual mode complication interface is configured to perform electrical parameter measurements on an ISDN circuit coupled to said second port, and said first communication interface is configured to conduct direct digital data communications with a digital communication-based test set terminating said ISDN circuit coupled to said first port.

8. An ISDN callback device for controllably testing an ISDN circuit, comprising a dual mode communication interface having a port to which an ISDN circuit under test is connectable, and which is controllably operative as either an ISDN network termination device to conduct ISDN test communications over a first portion of said ISDN circuit, or as a line termination (LT) device terminating a second portion of said ISDN circuit, in which said dual mode communication interface is configured to perform electrical para meter measurements on an ISDN circuit coupled to said port, and is configured to supply line voltage to a metallic circuit coupled to said port, and said electrical parameter measurements include tone generation and current measurement.

9. A method of testing an ISDN circuit, comprising the steps of:
(a) coupling said ISDN circuit to a first communication interface which is controllably operative as an ISDN network terimination device to conduct ISDN test communications with a test device;
(b) accessing said ISDN network termination device and causing said first communication interface to exchange contents of respective bearer channels of said ISDN circuit, so that said respective two bearer channels are looped back through a common bearer channel transport path; and
(c) performing full-duplex connectivity BER testing of said ISDN circuit by way of said common bearer channel transport path of said two looped back bearer channels.

10. A method as claimed in claim 9, wherein step (b) comprises placing a call from a telephone test set to said first communication interface via a first bearer channel of said ISDN circuit, and placing a return call from said first communication interface via a second bearer channel of said ISDN circuit to said telephone test set, and wherein step (c) comprises performing full-duplex connectivity BER testing of said ISDN circuit by way of said common bearer channel transport path of said two looped back first and second bearer channels of said ISDN circuit.

11. A method of testing an ISDN circuit, comprising the steps of:
(a) providing a dual mode communication interface having a port to which an ISDN circuit under test is connectable; and
(b) selectively configuring said dual mode communication interface as one of an ISDN network termination device and a line termination device, and conducting ISDN test communications over a first portion of said ISDN circuit containing a line termination, where said dual mode communication interface has been configured as said ISDN network termination device, or conducting ISDN test communications over a second portion of said ISDN circuit containing a network termination, where said dual mode communication interface has been configured as said line termination device.

12. A method as claimed in claim 11, wherein step (b) comprises selectively configuring said dual mode communication interface as said network termination device, and conducting ISDN test communications over said first portion of said ISDN circuit, and also step (b) comprises placing a call on a first bearer channel of said ISDN circuit from said dual mode communications interface to a directory number associated said second bearer channel and identifying said dual mode communications interface, so as to establish full-duplex, dual bearer channel connectivity between said dual mode communications interface and said line termination via a loop path containing said first and second bearer channels over said first portion of said ISDN circuit, thereby providing for bit error rate testing of the full information channel bandwidth of said first portion of said ISDN circuit.

13. A method as claimed in claims 11 or 12, wherein step (b) comprises selectively configuring said dual mode communication interface as said line termination device, and conducting ISDN test communications over said second portion of said ISDN circuit, and includes conducting electrical parameter measurements on said ISDN circuit, and further includes supplying line voltage to metallic leads of said ISDN circuit.

14. A method as claimed in claim 13, wherein said electrical parameter meas urements include tone generation and current measurement, in which step (b)comprises placing calls from said dual mode communication interface over each of respective bearer and control channels to an ISDN test device, which loops said bearer and control channels back over return paths to said dual mode communication interface.
